# EUROPEAN PATENT APPLICATION

(11) **EP 1 574 728 A2**
(43) Date of publication of application: **14.09.2005**
(21) Application number: 05101223.5
(22) Date of filing: 18.02.2005
(51) Int. Cl.: F16B 43/00, F16B 5/02

(54) **Noise suppressing fastener.**

(30) Priority: 09.03.2004 IT TO20040147
(71) Applicant: CNH Italia S.p.A., 41100 Modena (IT)
(72) Inventor: Santamaria, Orazio, 41100, Modena (IT)
(74) Representative: Vandenbroucke, Alberic

(57) **Abstract**

A noise suppressing fastener 125 is described for securing two components 112 and 114 to one another. The fastener comprises a bolt 120 having a head and a screw threaded shank 122 to pass through aligned holes in the two components, a nut 124 for threading onto the shank 122 of the bolt, a spacer tube 130 of rigid material surrounding the shank 122 to couple the nut and bolt acoustically to a first 112 of the two components, and a bush 132 of sound isolating material surrounding the spacer tube 130 to decouple the nut and bolt acoustically from the second component 114. In the invention, a washer 128 is formed integrally with the spacer tube 130, the sound isolating bush 132 is bonded to the outer surface of the spacer tube 130 and to the washer and a second tube 140 of a rigid material, which in use is acoustically decoupled from the first component 112, is bonded to the radially outer surface of the bush 132 to prevent radial contact between the bush and the second component.

## Description

The present invention relates to a noise suppressing fastener for securing two components to one another while damping any vibrations passing from one to the other.

When mounting a component such as a mudguard on the chassis of an agricultural vehicle, it is desirable to take steps to reduce noise by placing a layer of sound isolating material (such as felt or rubber) between the mudguard and the chassis and by using noise suppressing fasteners to decouple the mudguard acoustically from the chassis at its mounting points.

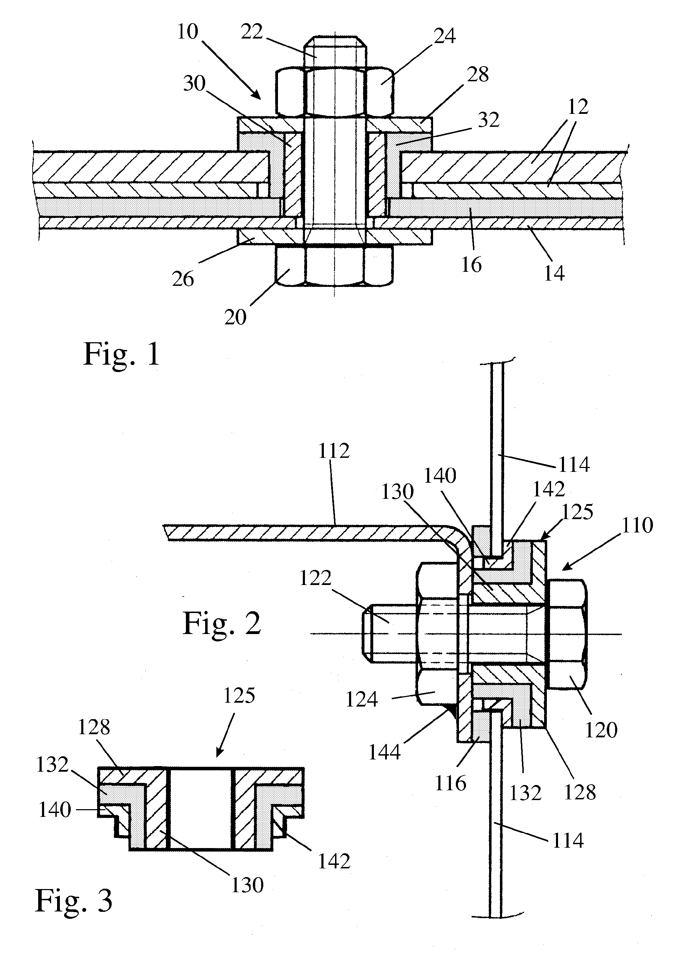

Figure 1 of the accompanying drawings shows a cross section through a known mudguard mounting point designed to decouple the mudguard acoustically from the chassis. The chassis 12 comprises two plates that are welded to one another and have aligned holes for receiving a fastener 10. The mudguard 14 has a backing 16 of a sound isolating material that prevents any vibrations from being transmitted between the mudguard 14 and the chassis 12. Like the chassis 12, the mudguard 14 is formed with a hole for receiving the fastener 10. The fastener 10 is itself designed not to provide a direct acoustic coupling between the mudguard 16 and the chassis 12. To this end, the fastener 10 comprises a bolt 20 having a shank 22 in threaded engagement with a nut 24. Two washers 26 and 28 are arranged beneath the nut 24 and the head of the bolt 20 and a metal spacer sleeve is fitted over the shank 22 of the bolt 20 so that the clamping force of the bolt 20 and the nut 24 is applied through the washers 26 and 28 and the spacer 30 to the opposite sides of the mudguard 14. In this way, the nut and bolt are acoustically coupled to the mudguard and in order to decouple them acoustically from the chassis 12, a bush 32 of sound isolating material is fitted around the shank 22 and beneath the washer 28.

While offering acceptable acoustic performance, the fastener of Figure 1 has several disadvantages. First, in addition to the nut and bolt, the fastener comprises four components, namely two washers, a metal sleeve and a sound isolating bush. Second, it is difficult to assemble the fastener, especially when the rear side of the chassis is not accessible. Third, the bush is prone to wear because of the direct contact between it and the chassis, relative to which it can vibrate with the mudguard.

With a view to mitigating at least some of the foregoing disadvantages, the present invention provides a noise suppressing fastener for securing two components to one another, comprising a bolt having a head and a screw threaded shank to pass through aligned holes in the two components, a nut for threading onto the shank of the bolt, a spacer tube of rigid material surrounding the shank to couple the nut and bolt acoustically to a first of the two components and a bush of sound isolating material surrounding the spacer tube to decouple the nut and bolt acoustically from the second component, characterised in that a washer is formed integrally with the spacer tube, the sound isolating bush is bonded to the outer surface of the spacer tube and to the washer, and a second tube of a rigid material, which in use is acoustically decoupled from the first component, is bonded to the radially outer surface of the bush to prevent radial contact between the bush and the second component.

Preferably, the outer tube is also formed integrally with a radially extending washer that is bonded to the bush to prevent axial contact between the bush and the second component.

In the invention, a single composite bushing replaces the four components used in the prior art. Furthermore, the sound isolating bush is protected by the outer tube from being subjected to wear by radial contact, and preferably also axial contact, with the second component. Additionally, the nut and bolt in the invention may be acoustically coupled to the chassis and acoustically isolated by the composite bush from the mudguard. This facilitates assembly because the nut can be held captive within or welded to the chassis.

The invention will now be described further, by way of example, with reference to the accompanying drawings, in which:
Figure 1 is a section through a known mudguard mounting point as described above,
Figure 2 is a similar section of a mudguard mounting point using a fastener of the invention, and
Figure 3 shows a section through the composite bushing of fastener shown in Figure 2.

In Figure 2, a chassis 112 is formed with a hole for receiving a noise suppressing fastener 110. A mudguard 114 with an aligned hole of larger diameter is secured to the chassis 112 by the fastener 110 and a layer of sound isolating material 116 is arranged between the two to decouple them acoustically from one another.

The fastener 110 comprises a bolt 120 having a shank 122 in threaded engagement with a nut 124. A single composite bushing 125, shown separately in Figure 3, is arranged between the head of the bolt 120. The composite bushing 125 comprises a metal spacer tube 130 formed integrally at one end with a washer 128 that lies beneath the head of the bolt 120. The chassis 112 is directly clamped between the end of the spacer tube 130 and nut 124 so that the nut, the bolt and the spacer tube are all directly acoustically coupled to chassis. To decouple the spacer tube 130 acoustically from the mudguard, a bush 132 of sound isolating material is bonded to its outer surface.

A further tube 140 is bonded to the radially outer surface of the bush 132 which is axially shorter than the spacer tube 130. The outer tube 140 makes direct contact with the mudguard 114 and is acoustically coupled to it, but it does not contact the chassis 112 and remains acoustically isolated from it. The outer tube 140 is also formed integrally with a washer 142 that prevents axial contact between the bush 132 and the mudguard 114.

The bush 132 is preferably made of rubber and is bonded to the spacer and outer tubes 130, 140 by vulcanising.

In the arrangement shown in Figure 2, the rear of the chassis is shown as being accessible but, if it is not, then the nut 124 may be permanently pre-mounted on the chassis such as by means of a spot weld 144.

To assemble the mudguard 114, it is placed over the chassis 112 and after slipping a composite bushing 125 on to the shank 122 of the bolt 120, the latter is tightened onto the nut 124. The entire operation is as simple as using any conventional nut, bolt and washer which both simplifies assembly and eliminates the possibility of any error, such as the omission in the prior art of one of the essential components of the fastener.

## Claims

1. A noise suppressing fastener for securing two components (112, 114) to one another, comprising:
- a bolt (120) having a head and a screw threaded shank (122) to pass through aligned holes in the two components,
- a nut (124) for threading onto the shank (122) of the bolt (120),
- a spacer tube (130) of rigid material surrounding the shank (122) to couple the nut (124) and bolt (120) acoustically to a first (112) of the two components, and
- a bush (132) of sound isolating material surrounding the spacer tube (130) to decouple the nut (124) and bolt (120) acoustically from the second component (114), and
**characterised in that**:
- a washer (128) is formed integrally with the spacer tube (130);
- the sound isolating bush (132) is bonded to the outer surface of the spacer tube (130) and to the washer (128) ; and
- a second tube (140) of a rigid material, which in use is acoustically decoupled from the first component (112), is bonded to the radially outer surface of the bush (132) to prevent radial contact between the bush (132) and the second component (114).

2. A fastener according to claim 1, **characterized in that** the outer tube (140) is formed integrally with a radially extending washer (142) that is bonded to the bush (132) to prevent axial contact between the bush (132) and the second component (114).

3. A fastener according to claim 1 or 2, **characterized in that** the sound isolating bush (132) is formed of a rubber that is bonded to the spacer tube (130) and the second tube (140) by vulcanising.

4. A fastener according to any of the preceding claims, **characterized in that** the nut (124) is pre-mounted on one of the two components (112, 114) to be secured to one another.
